(19) Europäisches Patentamt

European Patent Office

Office européen des brevets

(11) Veröffentlichungsnummer: **0 349 903 B1**

(12) **EUROPÄISCHE PATENTSCHRIFT**

(45) Veröffentlichungstag der Patentschrift: **02.12.92**

(21) Anmeldenummer: **89111861.4**

(22) Anmeldetag: **29.06.89**

(51) Int. Cl.5: **C08L 27/06**, C08L 101/00, C09D 127/06, //(C08L27/06, 101:00)

(54) **Plastisol-Formmassen, Verfahren zu ihrer Herstellung und ihre Verwendung.**

(30) Priorität: **29.06.88 DE 3821926**

(43) Veröffentlichungstag der Anmeldung:
**10.01.90 Patentblatt  90/02**

(45) Bekanntmachung des Hinweises auf die Patenterteilung:
**02.12.92 Patentblatt  92/49**

(84) Benannte Vertragsstaaten:
**DE ES FR GB IT**

(56) Entgegenhaltungen:
**DE-A- 2 827 516**
**DE-A- 2 939 130**

(73) Patentinhaber: **Ems-Togo AG**
**Hofstrasse 31**
**CH-8590 Romanshorn(CH)**

(72) Erfinder: **Abend, Thoams, Dr. Ing. Chem.**
**Sandrainstr. 8**
**CH-9016 St. Gallen(CH)**
Erfinder: **Lauchenauer, Max**
**Brühlstr. 87C**
**CH-9320 Arbon(CH)**

(74) Vertreter: **Müller-Boré & Partner Patentanwälte**
**Isartorplatz 6 Postfach 26 02 47**
**W-8000 München 2(DE)**

**Beschreibung**

Die Erfindung betrifft Plastisolformmassen, insbesondere auf der Basis von PVC-Polymerisaten und/oder -Copolymerisaten.

Plastisolformmassen werden in großem Umfange im Fahrzeugbau zum Abdichten, Verbinden und Versiegeln von Nähten und Bördelfälzen von Karosserieblechen im Innen- und Außenbereich verwendet. Insbesondere kommen für diesen Zweck Plastisole auf der Basis von PVC-Polymerisaten und/oder -Copolymerisaten in Frage. Derartige Plastisolformmassen bestehen bekanntlich aus feinen Polymerteilchen, die in einem flüssigen, nicht flüchtigen Weichmacher dispergiert sind. Bei Raumtemperatur sind die festen Polymerteilchen im Weichmacher unlöslich, der sie jedoch bei erhöhter Temperatur solvatisiert, so daß eine homogene Lösung des Polymeren im Weichmacher erhalten wird, die sich beim Abkühlen zu einem mehr oder weniger starren Film verfestigt. Zusätzlich können die Plastisole Zuschlagstoffe, wie Füllstoffe, Hilfsmittel, die das Fließverhalten steuern, wasserabsorbierende Substanzen, wie Calciumoxid, Stabilisatoren, Pigmente und Haftvermittler enthalten. Aufgabe der Haftvermittler ist es, eine dauerhafte Haftfestigkeit auf den Oberflächen von gebräuchlichen Werkstoffen, wie beispielsweise nichtentfettetem Rohstahl, verzinkten oder verzinnten Blechen, elektrotauchlackierten Blechen etc., zu bewirken.

Beispiele für Haftvermittler für PVC-Plastisole sind Polyaminoamide, Polyamine, Umsetzungsprodukte überschüssiger Mengen von polyfunktionellen Aminen mit monomeren oder oligomeren Bisphenol-A-Glycidylethern, blockierte Isocyanate, Silane, Gemische von Urotropin mit Resorzinol etc., sowie deren Mischungen.

Im Fahrzeugbau werden Plastisole, insbesondere PVC-Plastisole, entweder im Rohbau auf nichtentfettetes Rohblech oder anschließend an die Elektrotauchlackierung auf die mit üblicherweise kataphoretisch aufgetragener Grundierung versehene Bleche aufgetragen. Werden die Plastisole im Rohbau aufgetragen, findet der Geliervorgang mit nachfolgender Verfestigung in einem Vorgelierofen vor der Elektrotauchlackierung oder im Einbrennofen der Elektrotauchlackierung statt. Im Falle des Auftrags auf elektrotauchlackierte Bleche findet die Verfestigung der Plastisole beim Einbrennen der nachfolgend aufgetragenen Füller, d.h. einer Zwischenschichtlackierung, oder Decklacke statt. In den meisten Fällen werden beim Spritzauftrag der Füller oder Decklacke auch die zuvor aufgetragenen bereits gelierten oder noch nicht gelierten Plastisole überlackiert.

Es wird häufig festgestellt, daß sich weiße, helle oder pastellfarbene Decklackierungen an denjenigen Stellen gelblich verfärben, an welchen sie auf Plastisole aufgetragen wurden. Derartige störende Verfärbungen treten unabhängig davon auf, ob die Plastisole vor dem Überlackieren geliert wurden oder nach dem Naß-in-Naß-Verfahren auf ein ungeliertes Plastisol eine Schicht des Decklacks aufgetragen wurde. Die zu beobachtende gelbliche Verfärbung der überlackierten Stellen ist selten unmittelbar nach dem Einbrennen der Decklackierung sichtbar, in den meisten Fällen tritt die störende gelbliche bis bräunliche Verfärbung erst innerhalb einiger Wochen oder Monate auf. Vergilbungen dieser Art wurden insbesondere dann festgestellt, wenn die Blechvorbehandlung von anodischer auf kathodische Tauchlackierung umgestellt wurde und die Innenräume von Automobilkarosserien nicht mehr mit einer Zwischenlackschicht versehen wurden.

Die vorliegende Erfindung hat sich die Aufgabe gestellt, Plastisolformmassen zu schaffen, bei deren Verwendung nicht mehr die vorstehend geschilderten Vergilbungen von Decklackierungen auftreten.

Diese Aufgabe wird durch die erfindungsgemäßen Plastisolformmassen auf der Basis von PVC-Polymerisaten und/oder -copolymerisaten gelöst, welche dadurch gekennzeichnet sind, daß sie stark saure Kationenaustauscher in einer Menge von 0,005 bis 5,0 Gew.-% enthalten.

Die Erfindung beruht demgemäß auf der überraschenden Feststellung, daß im Falle des Vorliegens von stark sauren Kationenaustauschern in den genannten Plastisolformmassen keine Vergilbungen bzw. Verfärbungen aufgebrachter weißer, heller oder pastellfarbener Decklackierungen mehr auftreten.

Die DE-OS 29 39 130 beschreibt PVC-Plastisole, die als inerte wasserbindende Stoffe Molekularsiebe enthalten. Derartige Molekularsiebe reagieren meistens alkalisch. Daß sie nicht als stark saure Kationenaustauscher eingesetzt werden, wird auch durch den Hinweis belegt, daß saure Puffersubstanzen in den Plastisolen verwendet werden.

Nachdem die erfindungsgemäßen Plastisolformmassen gewöhnlich erhebliche Mengen an stark basischen Zuschlagstoffen, wie Calciumoxid, Bariumoxid, Calciumcarbonat oder Metallseifen, enthalten, ist es überraschend, daß die stark sauren Kationenaustauscher in den erfindungsgemäßen Plastisolformmassen ihre Wirkung entfalten können, die vermutlich darin besteht, beim Einbrennen frei werdende niedermolekulare Amine zu binden.

Erfindungsgemäß kommen alle bekannten stark sauren Kationenaustauscher in Frage, die erhalten werden durch Polymerisation oder Copolymerisation von Styrol, Divinylbenzol, Acrylsäure, Styrolsulfonsäuren, bzw. nachträgliche Sulfonierung von solchen Polymeren oder Copolymeren (vgl. dazu auch Römpps Chem. Lexikon, 7. Aufl., Seiten 1616 und 1617).

Als besonders geeignet haben sich stark saure Kationenaustauscherharze auf der Basis von Polystyrol-Sulfonsäuren erwiesen, die eine Austauschkapazität im Bereich von 0,5 mVal/g, jedoch nicht mehr als 10,0 mVal/g und insbesondere von 1,0 mVal/g bis 5,0 mVal/g besitzen. Die Säuregruppen dieser Kationenaustauscherharze sollen dabei überwiegend in der sauren protonisierten Form vorliegen.

Die erfindungsgemäßen Plastisole enthalten die stark sauren Kationenaustauscher in einer Menge von 0,005 bis 5,0 Gew.-%, vorzugsweise 0,01 bis 2,0 Gew.-%.

Vorzugsweise übersteigt die Korngröße der eingesetzten pulverisierten Kationenaustauscherharze nicht diejenige von vorliegenden PVC-Harzen, körnigen Additiven und Füllstoffen.

Die erfindungsgemäßen Plastisolformmassen werden durch gründliches Einmischen der stark sauren Kationenaustauscher hergestellt. In zweckmäßiger Weise erfolgt das Einmischen der stark sauren Kationenaustauscher in der Weise, daß eine Paste aus Plastisolweichmacher, stark sauren Kationenaustauscherharzen sowie gegebenenfalls verwendeten Additiven, wie Füllstoffen, Pigmenten, wasserabsorbierenden Substanzen, das Fließverhalten steuernden Substanzen oder Haftvermittlern, hergestellt und in eine Plastisolformmasse eingemischt wird. Eine derartige Paste besteht beispielsweise aus 35 bis 75 Gew.-% eines oder mehrerer Weichmacher, 5 bis 35 Gew.-% eines oder mehrerer stark saurer Kationenaustauscher und 10 bis 50 Gew.-% eines oder mehrerer mineralischer Füllstoffe, wobei sich die Anteile zu 100 % ergänzen, wobei diese Paste vorzugsweise in einer Menge von 0,1 bis 15 Gew.-%, bezogen auf eine Plastisolformmassen, dieser zugemischt wird. Natürlich ist es auch möglich, die stark sauren Kationenaustauscher in Form eines Pulvers oder einer Dispersion in einem flüssigen Trägermaterial, das aus Weichmacher und/oder Lösungsmittel bestehen kann, in die Formmasse einzubringen. Die stark sauren Kationenaustauscher können auch zusammen mit pulverförmigen Additiven in die Plastisolformmassen eingemischt werden.

Die Herstellung von Plastisolen und die dafür verwendeten Vorrichtungen sind bekannt, beispielsweise aus folgenden Fachbüchern: Krekeler, Wick, Kunststoff-Handbuch (1963), Band II, Teil 1, Seite 21 ff., W.A. Colomb, Verlag Stuttgart; Becker, Braun, Kunststoff-Handbuch (1986), Band II, Teil 1 und 2, Hanser Verlag, München-Wien.

PVC-Plastisole, die erfindungsgemäß bevorzugt werden, enthalten beispielsweise folgende Bestandteile in den angegebenen Mengenverhältnissen; die sich zu 100 Gew.-% ergänzen:

a) 10 bis 60 Gew.-% eines PVC-Homo- oder Copolymerisats, das durch Emulsions-, Mikrosuspensions-, Suspensions-, Lösungs- oder Massenpolymerisation hergestellt wurde.

b) 20 bis 50 Gew.-% eines Weichmachers auf Basis von Estern aliphatischer oder aromatischer Mono-, Di- oder Polycarbonsäuren mit mono- oder di-funktionellen Alkoholen, Chlorparaffinen und/oder Sekundärweichmacher auf Basis von Kohlenwasserstoffen, Fettsäureestern, Sulfonsäureestern oder dergleichen.

c) 5 bis 60 Gew.-% mineralische oder organische Füllstoffe und Pigmente

d) funktionelle Additive, wie Stabilisatoren, Haftvermittler, Hilfsmittel zur Steuerung des Fließverhaltens, Lösungsmittel etc.

Die folgenden Beispiele erläutern die Erfindung.

Beispiel 1

Es wird ein pastenförmiges Plastisol "A" durch Vermischen der folgenden Bestandteile hergestellt:

| Diisononylphthalat | 28 Gew.-Teile |
| PVC-Emulsionspolymerisatpulver, verpastbar | 15 Gew.-Teile |
| gefällte Kreide | 21 Gew.-Teile |
| gemahlene natürliche Kreide | 29 Gew.-Teile |
| pulverisierter gebrannter Kalk | 4 Gew.-Teile |
| Polyaminoamid-Lösung [1] | 1 Gew.-Teil |
| anorganische Bleiverbindung [2] | 1 Gew.-Teil |
| hochsiedendes aliphatisches Benzin [3] | 1 Gew.-Teil |

[1] Polyaminoamid auf der Basis eines Umsetzungsproduktes aus dimerisierter Leinölfettsäure mit einem Überschuß an Diethylentriamin (Aminzahl 290), 50 %ige Lösung in Diisononylphthalat,
[2] dreibasisches Bleisulfat.
[3] Siedebereich 200 bis 250°C.

Die pulverförmigen Bestandteile und Zuschlagstoffe der Plastisolformulierung werden in dem vorgelegten Weichmacher mit einem hochtourigen Rührgerät angepastet und anschließend mit einem Walzenstuhl über drei Zylinder abgerieben.

Unter Verwendung der gleichen Bestandteile in den angegebenen Mengen wird ein zweites Plastisol "B" hergestellt, dem zusätzlich 3 Gew.-Teile einer Paste aus einem Polystyrol/Sulfonsäure-Pulver zugemischt werden.

| Polystyrol-Sulfonsäurepulver-Paste | |
| --- | --- |
| Diisononylphthalat | 52 Gew.-Teile |
| stark saurer Kationenaustauscher in H-Form auf der Basis von Polystyrol mit Sulfonsäuregruppen, in Pulverform mit einer maximalen Korngröße von 32 $\mu$m, 4,4 mVal/g | 20 Gew.-Teile |
| gefällte Kreide | 28 Gew.-Teile |

Die Plastisole A und B werden unter gleichen Bedingungen wie folgt verarbeitet:

Mit einer Fadenpistole wird eine ca. 1 mm dicke und 15 mm breite Naht des Plastisols A bzw. B über die Schnittkante des überlappenden Blechs einer Bördelnaht einer Personenwagentüre gelegt und 30 Minuten bei 160°C geliert. Das Blech wird vor dem Plastisolauftrag alkalisch entfettet, phosphatiert und mit einer handelsüblichen kataphoretischen Elektrotauchlackierung (Uniprime der Firma PPG*) versehen. Unmittelbar nach dem Auftrag des Plastisols wird ein weißer Seriendecklack aufgetragen, dessen Bindemittelsystem im wesentlichen aus einem säurehärtenden System auf der Basis von Alkyd/Melamin-Harz besteht. Der überlackierte Verbund wird anschließend während 30 Minuten bei 130°C eingebrannt.

Im Bereich des erfindungsgemäßen Plastisols B weist die Naht auch nach 2-monatigem Fahrbetrieb in feuchtem und warmem Klima eine reinweiße Farbe auf. Das Plastisol A gemäß dem Stand der Technik ohne den erfindungsgemäßen Zusatz von stark saurem Ionenaustauscherpulver zeigt im Bereich des überlackierten Plastisols eine auffällige gelbliche Verfärbung.

Beispiel 2

Aus folgenden Komponenten wird als Plastisol (C) eine Steinschlagschutzbeschichtung hergestellt, die nach Überlackieren und mehrwöchiger Lagerung im Feuchtklima eine Vergilbung erkennen läßt.

*PPG - Pittsburgh Plate Glass

| Mischung von $C_8$-Dialkylphthalaten | 33 Gew.-Teile |
| aliphatische Kohlenwasserstoffe, Siedepunkt 240°C | 5 Gew.-Teile |
| Polyaminoamid-Lösung [1] | 1 Gew.-Teil |
| Zinksulfidpigmente | 3 Gew.-Teile |
| Calciumoxidpulver | 5 Gew.-Teile |

[1]Polyaminoamid auf der Basis eines Umsetzungsproduktes aus dimerisierter Leinölfettsäure mit einem Überschuß an Diethylentriamin (Aminzahl 290), 50 %ige Lösung in Diisononylphthalat.

| Mischung von PVC und Copolymer-Pulver, verpastbar | 27 Gew.-Teile |
| Mischung aus gemahlener und gefällter Kreide | 26 Gew.-Teile. |

Bei Lagerung im Feuchtklima ist eine Vergilbung bereits nach 5 bis 10 Tagen feststellbar.

Auf Musterbleche üblicher Größe wird ein PVC-Plastisol (D) mit der Zusammensetzung wie in Plastisol C in einer Schichtdicke von 600 $\mu$m mit erfindungsgemässem Zusatz von von 3 Gew.-% stark saurem Kationenaustauscher aufgetragen, dann bei 40 Minuten bei 140°C geliert, mit weißem Decklack überlakkiert, während 30 Minuten bei 130°C eingebrannt und im Klimaschrank bei 40°C und 100 % relativer Feuchtigkeit lichtgeschützt gelagert. Auch nach 3 Wochen dauernder Lagerung im Feuchtklima ist keine Vergilbung erkennbar.

## Patentansprüche

1.  PVC-Plastisolformmassen auf der Basis von PVC-Polymerisaten und/oder -Copolymerisaten, **dadurch gekennzeichnet,** daß sie stark saure Kationenaustauscher in einer Menge von 0,005 bis 5,0 Gew.-% enthalten.

2.  Formmassen nach Anspruch 1, dadurch gekennzeichnet, daß die stark sauren Kationenaustauscher in einer Menge von 0,01 bis 2,0 Gew.-% vorliegen.

3.  Formmassen nach den Ansprüchen 1 oder 2, dadurch gekennzeichnet, daß die stark sauren Kationenaustauscher pulverisiert sind und ihre Korngröße diejenige von gegebenenfalls vorliegenden körnigen Additiven nicht übersteigt.

4.  Formmassen nach den Ansprüchen 1 bis 3, dadurch gekennzeichnet, daß die stark sauren Kationenaustauscher solche auf der Basis von Polystyrol mit Sulfonsäuregruppen mit mindestens 0,5 mVal/g, jedoch nicht mehr als 10,0 mVal/g und insbesondere 1,0 mVal/g bis 5,0 mVal/g sind.

5.  Verfahren zur Herstellung von PVC-Plastisolformmassen gemäß den Ansprüchen 1 bis 4, **dadurch gekennzeichnet,** daß man in PVC-Plastisolformmassen auf der Basis von PVC-Polymerisaten und/oder -Copolymerisaten stark saure Kationenaustauscher einmischt.

6.  Verfahren nach Anspruch 5, dadurch gekennzeichnet, daß man die stark sauren Kationenaustauscher in Form einer Paste aus Plastisolweichmacher, sauren Kationenaustauscherharzen sowie gegebenenfalls Additiven in die PVC-Plastisolformmasse einmischt.

7.  Verwendung der PVC-Plastisolformmassen gemäß den vorhergehenden Ansprüchen als Verklebungs-, Nahtabdichtungs- oder Beschichtungsmassen im Fahrzeugbau.

## Claims

1.  Plastisol moulding materials based on PVC polymers and/or copolymers, characterised in that they contain strongly acidic cation exchanger in an amount of 0.005 to 5.0% by wt.

2.  Moulding materials according to claim 1, characterised in that they contain the strongly acidic cation exchanger in an amount of 0.01 to 2.0% by wt.

3. Moulding materials according to claims 1 and 2, characterised in that the strongly acidic cation exchanger is particulate and its particle size does not exceed that of any additive particles that may be present.

4. Moulding materials according to claims 1 to 3, characterised in that the strongly acidic cation exchanger is of the class based on polystyrene comprising acid groups, having an exchange capacity of at least 0.5 mVal/g, but not more than 10.0 mVal/g, and in particular 1.0 mVal/g to 5.0 mVal/g.

5. A method of making PVC-plastisol moulding materials according to claims 1 to 4, characterised in that strongly acidic cation exchangers are mixed into PVC-plastisol moulding materials based on PVC polymers or copolymers.

6. Method according to claim 5, characterised in that the strongly acidic cation exchanger is mixed into the PVC-plastisol moulding material in the form of a paste of plastisol plasticiser, acidic cation exchange resins and, optionally, additives.

7. Use of PVC-plastisol moulding materials according to the preceding claims, as adhesives, seam-sealing materials or coating materials in automobile construction.

**Revendications**

1. Masses à mouler de plastisol de PVC, à base de polymères et/ou de copolymères PVC, caractérisées en ce qu'elles contiennent des échangeurs de cations fortement acides, en une proportion de 0,005 à 5,0 % en poids.

2. Masses à mouler conformes à la revendication 1, caractérisées en ce que les échangeurs de cations fortement acides s'y trouvent en une proportion de 0,01 à 2,0 % en poids.

3. Masses à mouler conformes à la revendication 1 ou 2, caractérisées en ce que les échangeurs de cations fortement acides sont pulvérisés et en ce que leurs dimensions de particules ne dépassent pas celles des adjuvants en particules éventuellement présents.

4. Masses à mouler conformes à l'une des revendications 1 à 3, caractérisées en ce que les échangeurs de cations fortement acides sont à base de polystyrène portant des groupes sulfo, avec au moins 0,5 mVal/g, mais pas plus de 10,0 mVal/g, et en particulier de 1,0 mVal/g à 5,0 mVal/g.

5. Procédé de fabrication de masses à mouler de plastisol de PVC conforme aux revendications 1 à 4, caractérisé en ce que l'on incorpore et mélange des échangeurs de cations fortement acides dans des masses à mouler de plastisol de PVC à base de polymères et de copolymères PVC.

6. Procédé conforme à la revendication 5, caractérisé en ce que l'on incorpore et mélange, dans la masse à mouler de plastisol de PVC, les échangeurs de cations fortement acides sous la forme d'une pâte constituée d'un plastifiant pour plastisol et de résines acides échangeuses de cations, ainsi que d'éventuels adjuvants.

7. Utilisation des masses à mouler de plastisol de PVC, conformes aux revendications précédentes, en tant que masses de collage, masses d'étanchéité par point ou masses d'enduction, dans la construction d'automobiles.